Europäisches Patentamt

European Patent Office

Office européen des brevets

(11) Veröffentlichungsnummer: **0 301 195**
**A2**

## (12) EUROPÄISCHE PATENTANMELDUNG

(21) Anmeldenummer: 88108286.1

(51) Int. Cl.⁴: **B32B 3/12**

(22) Anmeldetag: 25.05.88

(30) Priorität: 25.07.87 DE 3724753

(43) Veröffentlichungstag der Anmeldung:
**01.02.89 Patentblatt 89/05**

(84) Benannte Vertragsstaaten:
**FR GB IT**

(71) Anmelder: **Messerschmitt-Bölkow-Blohm
Gesellschaft mit beschränkter Haftung
Robert-Koch-Strasse
D-8012 Ottobrunn(DE)**

(72) Erfinder: **Kruse, Jürgen
Bernhard-Winter-Strasse 15
D-2800 Bremen(DE)**

(54) **Verbundmaterial.**

(57) Die Erfindung bezieht sich auf einen Verbundwerkstoff mit einer zwischen zwei Deckschichten angeordneten und damit verklebten Wabenschicht. Die
Schichten, insbesondere die Wabenschicht ist mit
einem Werkstoff benetzt, wodurch der Verbundwerkstoff radarstrahlenabsorbierend wirkt.

EP 0 301 195 A2

# Verbundmaterial

Die Erfindung bezieht sich auf ein Verbundmaterial mit einer zwischen zwei Deckschichten angeordneten und damit verklebten Wabenschicht.

Verbundwerksoffe werden seit geraumer Zeit benutzt, weil sich durch deren Einsatz insbesondere im Flugzeugbau Gewichtsvorteile ergeben. Kunstoffe haben jedoch den Nachteil,daß die in bezug auf Radarstrahlen nicht absorbierend wirken und daher können solche Werkstoffe ohne Schutzmaßnahmen nicht für militärisches Gerät benutzt werden.

Der Erfindung liegt somit die Aufgabe zugrunde, Verbundwerkstoffe zu schaffen die radarabsorbierend wirken. Gemäß der Erfindung ist diese Aufgabe dadurch gelöst, daß die Wände der Wabenschicht und die Deckschichten mit einem einen Verluststoff aufweisenden Harz, vorzugsweise Phenolharz gtränkt sind.

Die erfindungsmäßige Maßnahme hat den Vorteil Radarstrahlen zu absorbieren, so daß derartige Verbundwerkstoffe auch für militärisches Gerät einsetzbar werden. Für die Wabenschicht kann dabei ein im Handel unter der Bezeichnung "NOMEX" bekannter Papierwerkstoff benutzt werden, aber es ist ebenso möglich, dafür glasfaserverstärkte Kunstoffschichten, Aluminiumwerkstoffe oder metallisch beschichtete Kunstoffe einzusetzen. Die Wabenseite der Wabenschichten kann hier vorzugsweise 3,8mm, 4,6mm oder ein anderes geeignetes Maß betragen. Für diese Verluststoffe zur Benetzung der Wabenwände kann Kohlenstoff, z.B. Ruß, Metalloxyd, Karbonyleisen oder ein ähnlicher Stoff benuzt werden. Der Verluststoff bewirkt das Absorbieren der Radarstrahlen.

Die Verluststoffe werden einem Harz, z.B. einem Phenolharz beigemischt, mit dem die Waben getränkt werden. Das Tränken kann innerhalb des Herstellungsprozesses erfolgen, aber es ist ebenso möglich, das Benetzen des Verbundmaterials nach dem Aushärten des Verbundwerkstoffes vorzunehmen. Die Konzentration des Verluststoffes im Harz kann zwischen 55 bis 50% liegen.

## Ansprüche

1. Verbundmaterial mit einer zwischen zwei Deckschichten angeordneten und damit verklebten Wabenschicht, **dadurch gekennzeichnet,** daß die Wänade der Wabenschicht und die Deckschichten mit einem einen Verluststoff aufweisenden Harz, vorzugsweise einem Phenolharz, getränkt sind.

2. Verbundmaterial nach Anspruch 1, **dadurch gekennzeichnet,** daß der Anteil des Verluststoffes im Harz im Bereich von 5% bis 50% liegt.

3. Verbundmaterial nach Anspruch 1 oder 2, **dadurch gekennzeichnet,** daß für den Verluststoff Kohlenstoffpigmente, vorzugsweise Ruß benutzt wird.

4. Verbundmaterial nach Anspruch 1 oder 2, **dadurch gekennzeichnet,** daß für den Verluststoff ein Metalloxyd benutzt wird.

5. Verbundmaterial nach Anspruch 1 oder 2, **dadurch gekennzeichnet,** daß für Verluststoff Karbonyleisen benutzt wird.

6. Verbundmaterial nach einem der Ansprüche 1 bis 5, **dadurch gekennzeichnet,** daß für die Wabenschicht ein Papierwerkstoff benutzt wird.

7. Verbundmaterial nach einem der Ansprüche 1 bis 5, **dadurch gekennzeichnet,** daß für die Wabenschicht eine glasfaserverstärkte Kunststoffschicht benutzt wird.

8. Verbundmaterial nach einem der Ansprüche 1 bis 5, **dadurch gekennzeichnet,** daß für die Wabenschicht ein Aluminiumwerkstoff benutzt wird.

9. Verbundmaterial nach einem der Ansprüche 1 bis 5, **dadurch gekennzeichnet,**daß für die Wabenschicht metallisch beschichtete Kunststoffe benutzt werden.

10. Verbundmaterial nach einem der Ansprüche 1 bis 9, **dadurch gekennzeichnet,** daß für die Wabenschicht eine Schicht mit einer Wabenweite von etwa 3,8 mm benutzt wird.

11. Verbundmaterial nach einem der Ansprüche 1 bis 9, **dadurch gekennzeichnet,** daß für die Wabenschicht eine Schicht mit einer Wabenweite von etwa 4,6 mm benutzt wird.

12. Verbundmaterial nach einem der Ansprüche 1 bis 11, **dadurch gekennzeichnet,** daß das Tränken der Wabenschicht mit dem den Verluststoff aufweisenden Harz während des Herstellungsprozesses erfolgt

13. Verbundmaterial nach einem der vorhergehenden Ansprüche, **dadurch gekennzeichnet,** daß das Tränken der Wabenschicht mit dem den Verluststoff aufweisenden Harz nach Fertigstellung des Verbundmaterilas erfolgt.